# EUROPÄISCHE PATENTSCHRIFT

(11) **EP 1 625 368 B1**
(45) Veröffentlichungstag und Bekanntmachung des Hinweises auf die Patenterteilung: **04.04.2007**
(21) Anmeldenummer: 04738533.1
(22) Anmeldetag: 21.05.2004
(51) Int. Cl.: G01J 5/14, G01J 5/22, G01J 5/30, G01J 1/44

(54) **SCHALTUNGSANORDNUNG UND VERFAHREN ZUM AUSLESEN ELEKTRONISCHER SIGNALE AUS HOCHAUFLOESENDEN THERMISCHEN SENSOREN**
CIRCUIT AND METHOD FOR READING OUT ELECTRIC SIGNALS FROM A HIGH-RESOLUTION THERMAL SENSORS
CIRCUIT ET PROCEDE DE LECTURE DE SIGNAUX ELECTRIQUES PROVENANT DE CAPTEURS THERMIQUES A RESOLUTION ELEVEE

(30) Priorität: 21.05.2003 DE 10322860
(43) Veröffentlichungstag der Anmeldung: 15.02.2006
(73) Patentinhaber: X-FAB Semiconductor Foundries AG, 99097 Erfurt (DE)
(72) Erfinder: WENNMACHER, Christian, 91315 Hoechstadt (DE); MIKUTA, Reinhard, 39218 Schoenebeck (DE); BURTE, Edmund, P., 95512 Neudrossenfeld (DE)
(74) Vertreter: Leonhard, Frank Reimund
(86) Internationale Anmeldenummer: PCT/DE2004/001063
(87) Internationale Veröffentlichungsnummer: WO 2004/106875

(56) Entgegenhaltungen:
- WO-A-00/38409
- US-A- 5 729 285
- KAVADIAS S ET AL: "CMOS circuit for readout of microbolometer arrays" ELECTRONICS LETTERS, IEE STEVENAGE, GB, Bd. 37, Nr. 8, 12. April 2001 (2001-04-12), Seiten 481-482, XP006016450 ISSN: 0013-5194
- Pyroelectric line scanner for remote IR imaging of vehicles. Jakowatz, Smiel, Eichel Infrared Technology XIII; 18-20 aug 1987. Proceedings of the SPIE. ISSN-0277-786X XP002299541
- KAWAHITO S ET AL: "Active pixel circuits and signal processing techniques for a chopperless pyroelectric infrared image sensor" SENSORS AND ACTUATORS A, ELSEVIER SEQUOIA S.A., LAUSANNE, CH, Bd. 97-98, 1. April 2002 (2002-04-01), Seiten 184-192, XP004361601 ISSN: 0924-4247

## Beschreibung

Es wird eine Schaltungsanordnung zum Auslesen elektronischer Signale aus hochauflösenden thermischen Sensoren mit kleinen Signalen und kleiner Signaldynamik angegeben, welche ein störungsfreies Auslesen von Einzelelementen aus einer größeren Sensoranordnung (Sensorarray) gestattet.

Die Erfindung betrifft auch eine Schaltungsanordnung zum störungsfreien Auslesen elektronischer Signale von Einzelelementen hochauflösender Anordnungen (Arrays) von thermischen Sensoren wie Thermoelemente, Thermopiles, Pyrometer und Bolometer. Ebenso ein oder mehrere entsprechende Verfahren.

In vielen Bereichen werden hochauflösende Sensoren mit einer großen Anzahl von Einzelelementen eingesetzt. Die Anzahl der Einzelelemente kann stark variieren und reicht heute typischerweise von einigen Dutzend bis zu einigen Millionen (Mega Pixel-Sensoren). Ein paralleles Auslesen derartig vieler Datenkanäle ist in der Regel nicht praktikabel, da dann die Anzahl der Anschlüsse gleich der Anzahl der Einzelelemente sein müsste. Stattdessen werden die Sensorsignale mittels eines Multiplexers über eine oder einige wenige Datenleitungen seriell ausgelesen. Der Multiplexer ist dabei in die Anordnung der Einzelsensoren integriert. Bei störanfälligen Sensoren wird in einigen Fällen noch ein Verstärker pro Datenleitung hinter dem Multiplexer angeordnet nachgeschaltet.

Den Stand der Technik repräsentiert die Publikation 256-Pixel CMOS-INTEGRATED THERMOELECTRIC INFRARED SENSOR ARRAY von **A. Schaufelbuehl** et al., Proc. MEMS (2001), Interlaken, Switzerland, Jan. 21-25, (2001), pp. 200-203. Bei sehr kleinen Signalen und besonders mit geringer Signaldynamik kann es beim Auslesen zu empfindlichen Störungen kommen, insbesondere auch durch den Multiplexer selbst. Ein typisches Beispiel hierfür sind integrierte Thermopile-Anordnungen, bei denen aufgrund des hohen Innenwiderstandes nur sehr kleine Ströme fließen, die sehr störanfällig sind.

**Kavadias**, de Moor, van Hoof, CMOS CIRCUIT FOR READOUT OF MICROBOLOMOETER ARRAY, Electronic Letters Vol. 37, No. 8, April 2001, zeigt eine CMOS Schaltung für das Auslesen von Mikrobolometerarrays. Dortige Mikrobolometersignale werden mittels eines Multiplexers ausgelesen, wobei zwischen jedes einzelne Sensorelement und dem Multiplexer jeweils ein eigener Verstärker geschaltet ist.

**Es ist Aufgabe der Erfindung**, die Störanfälligkeit von thermischen Sensoren mit einer hohen Anzahl von Einzelelementen zu verringern, d.h. das Auflösungsvermögen bei Verkleinerung des Einzelelementes zu steigern, insbesondere soll die Qualität hochauflösender thermischer Sensoren verbessert werden.

Erfindungsgemäß wird die Aufgabe durch eine Schaltungsanordnung bestehend aus einer Vielzahl von thermischen Sensorelementen, mindestens einem Multiplexer und Verstärkern, wobei die Signale einer Vielzahl einzelner thermischer Sensoren mittels eines Multiplexers über eine oder einige wenige Datenleitungen seriell ausgelesen werden, gelöst, wobei zwischen jedem einzelnen thermischen Sensorelement und dem Multiplexer jeweils ein Verstärker geschaltet ist, und wobei die Verstärker zur Verringerung der Wärmelast zyklisch ein- und ausschaltbar sind (Anspruch 1).

Die Verstärker werden vorzugsweise als Halbleiterbauelemente ausgeführt, so daß sie mit denselben Fertigungsschritten wie die Sensoren integriert hergestellt werden können. Die Verstärker können als Operationsverstärker, Differenzverstärker oder auch als Impedanzwandler ausgelegt sein.

Das Verfahren der Arbeitsweise des Pixel-Sensor-Array erfasst Anspruch 9.

Die Erfindung wird anhand von Ausführungsbeispielen erläutert und ergänzt, wobei darauf hingewiesen wird, daß es sich bei der folgenden Darstellung um die Beschreibung eines bevorzugten Beispiels der Erfindung handelt.

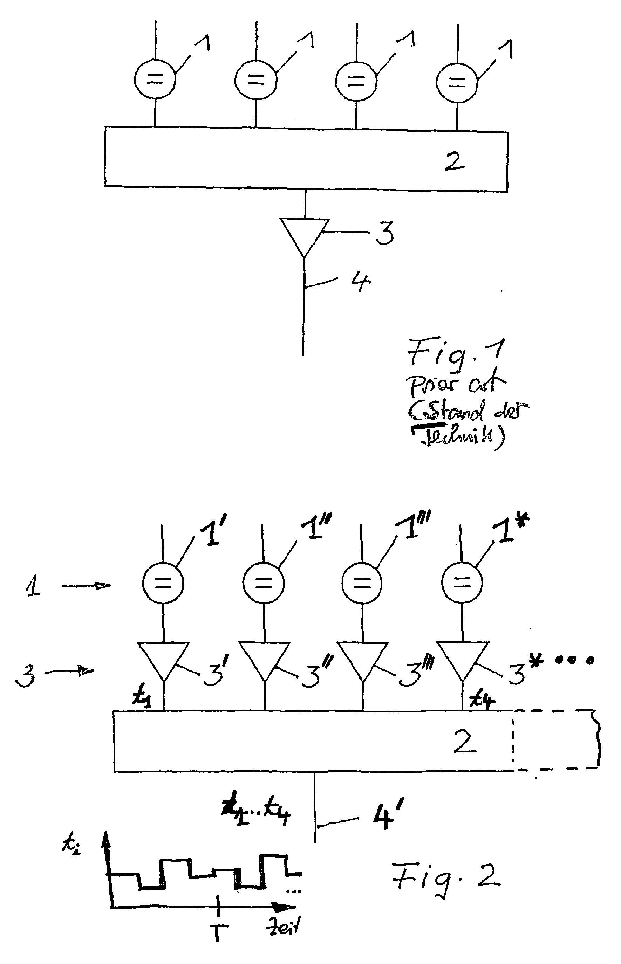

Zur weiteren Erläuterung der erfindungsgemäßen Schaltungsanordnung dienen die Figuren 1 und 2.

Der bisher üblichen Schaltungsanordnung gemäß Fig. 1 ist in Fig. 2 die erfindungsgemäße gegenübergestellt.
- Figur 1: zeigt eine bekannte Schaltungsanordnung zum Auslesen elektronischer Signale aus thermischen Sensoren.
- Figur 2: ist ein Ausführungsbeispiel einer erfindungsgemäßen Ausführung einer solchen Anordnung.

Mit Bezugszeichen 1 sind thermische Sensorelemente gekennzeichnet, von denen eine Vielzahl vorgesehen ist. Im Beispiel der Figur 2 sind vier solcher thermischen Sensoren 1 dargestellt. Sie arbeiten auf einen Multiplexer 2, der von allen thermischen Sensoren die Signale aufnimmt und an eine (gemultiplexte) Datenleitung 4' abgibt. Zwischen jedem thermischen Sensorelement 1 und dem Multiplexer 2 ist jeweils ein Verstärker 3 geschaltet.

Jeder Kanal ist nach Figur 2 so beschrieben, daß die gleiche Anordnung besteht. Der erste Kanal hat einen ersten thermischen Sensor 1', der auf einen ersten Verstärker 3' arbeitet, welcher den Multiplexer an einem seiner Eingänge - sinnigerweise dem ersten - speist. Der zweite Kanal hat einen zweiten thermischen Sensor 1" und einen zweiten Verstärker 3", der den zweiten Eingang des Multiplexers speist. Der dritte Kanal hat einen dritten thermischen Sensor 1"' und einen eigenen Verstärker 3"'; dieser speist den dritten Eingang des Multiplexers 2. Ein vierter Kanal hat einen vierten thermischen Sensor 1*, der einen vierten Verstärker 3* speist, welcher den vierten Eingang des Multiplexers 2 speist. Die Anordnung ist beliebig erweiterbar oder reduzierbar, solange zumindest zwei thermische Sensoren vorhanden sind und damit mehr als einer. Die Anzahl der thermischen Sensoren, welche maximal angeschlossen werden kann, richtet sich nach der Anzahl der Eingänge des Multiplexers 2.

Der Datenausgang 4' des Multiplexers 2 gibt zeitlich geschachtelt die mehreren Eingangssignale ab, welche an den mehreren, hier vier, Eingängen des Multiplexers liegen.

Zur Veranschaulichung der Signalführung sind die thermischen Signale t₁ bis t₄ am Eingang angegeben. Diese sind gemultiplext am Ausgang 4' zeitlich aufgelöst abzulesen und werden weitergegeben.

Die thermischen Sensoren sind hoch-auflösende thermische Sensoren mit kleinen Signalen und kleiner Signaldynamik. Ein störungsfreies Auslesen dieser Einzelelemente aus einer größeren Sensoranordnung, die als Sensorarray benannt wird, ist gestattet.

Die Schaltungsanordnung erlaubt das störungsfreie Auslesen der Signale der Einzelelemente, welche gemeinsam eine hoch-auflösende Anordnung von thermischen Sensoren bilden. Als thermische Sensoren kommen Thermoelemente, Thermopiles, Pyrometer und Bolometer in Frage. Das Bezugszeichen 1' bis 1* steht repräsentativ für die einen oder anderen der genannten hoch-auflösenden thermischen Sensoren.

Es sind Vorkehrungen getroffen, durch welche die Verstärker 3' bis 3* zur Verringerung der Wärmelast zyklisch ein- und ausgeschaltet werden.

Als Verstärker kommen Operationsverstärker, Differenzverstärker oder Impedanzwandler in Frage.

Die Schaltung als Array ist bevorzugt in CMOS-Technologie herstellt und zwar als integrierte Schaltung. Die Anzahl der einzelnen Elemente variiert stark und reicht typischerweise von einigen Duzend bis zu einigen Millionen Sensoren (Megapixel-Sensoren). Ein paralleles Auslesen derartig vieler Datenkanäle erfolgt über den Multiplexer 2. Von der dargestellten einen Schaltungsanordnung können eine Vielzahl integriert in dem IC angeordnet sein, so dass sich nicht nur ein Ausgangssignal 4' ergibt, sondern einige mehr, die aber noch immer - verglichen zu der Anzahl der Eingangskanäle-nur "einige wenige" Datenleitungen sind. Der Multiplexer 2 ist dabei in die Anordnung der Einzelsensoren integriert.

Die Verstärker sind vorzugsweise als Halbleiter-Bauelemente ausgeführt, wobei sie mit denselben Fertigungsschritten hergestellt werden, mit denen die thermischen Sensoren 1' bis 1* hergestellt werden. Das Abschalten der Verstärker 3' bis 3* ist graphisch nicht dargestellt, ist aber für den Fachmann aus dem Kontext und der Schaltungsanordnung ohne weiteres verständlich, auch ohne zeichnerische Darstellung. Das zyklische Zu- und Abschalten erfolgt bei den Verstärkern, bspw. durch gesonderte Eingänge (shut down, disable). Damit wird die Wärmelast verringert.

In Figur 2 veranschaulicht der Multiplexer 2 am rechten Rand, dass die beispielhaft dargestellten vier Eingangskanäle nur der Beginn einer großen Vielzahl von Eingangskanälen sein kann, die auf denselben Multiplexer arbeiten. Beispielsweise können 256 Pixel gewählt werden, die sich auf einen Multiplexer mit einem 8 Bit-Steuereingang für die Auswahl der Kanäle 1 bis 255 beziehen. Der Fachmann hat hier nicht so viele hochgestellte Indizes zur Verfügung, dass sie alle zur eindeutigen Kennzeichnung jedes einzelnen Verstärkers 3 herangezogen werden könnten, zum anderen ist die Breite des Blattes begrenzt. Es werden deshalb nur einige wenige dargestellt, aus einer Vielzahl von thermischen Elementen aus einem Array.

### Bezugszeichenliste

- 1:: thermische Sensorelemente
- 2:: Multiplexer
- 3:: Verstärker
- 4:: Datenausgang

## Patentansprüche

1. **Anordnung zum Auslesen** elektronischer Signale (t1,t4) aus hochauflösenden thermischen Sensoren, mit einer Vielzahl thermischer Sensorelemente (1',1*), zumindest einem Multiplexer (2) und Verstärkern (3',3*), wobei die Signale der Vielzahl von Sensorelementen mittels des mindestens einen Multiplexers über zumindest eine Datenleitung (4') seriell auslesbar sind, wobei zwischen jedem einzelnen thermischen Sensorelement (1',1*) und dem Multiplexer (2) jeweils ein eigener Verstärker (3',3*) geschaltet ist, **dadurch gekennzeichnet, dass** die Verstärker (3',3*) zyklisch ein- und ausschaltbar sind, um eine Wärmelast zu verringern.

2. Anordnung nach Anspruch 1, wobei die Verstärker über Vorkehrungen in der Schaltung ein- und ausschaltbar sind.

3. Anordnung nach Anspruch 1 oder 2, wobei die Verstärker Operationsverstärker sind.

4. Anordnung nach Anspruch 1 oder 2, wobei die Verstärker Differenzverstärker sind.

5. Anordnung nach Anspruch 1 oder 2, wobei die Verstärker Impedanzwandler sind.

6. Anordnung nach Anspruch 1 oder 2, wobei die Schaltungsanordnung in CMOS-Technologie integriert hergestellt ist.

7. Anordnung nach Anspruch 1, wobei sie als Array mehr als "einige Dutzend" von Sensorelementen besitzt.

8. Anordnung nach Anspruch 7, wobei einige Millionen Sensoren (1', 1*) vorgesehen sind, und einige wenige Multiplexer (2).

9. **Verfahren zum Auslesen** elektronischer Signale (t1,t4) aus hoch-auflösenden thermischen Sensoren, mit einer Vielzahl thermischer Sensorelemente (1', 1*), zumindest einem Multiplexer (2) und Verstärkern (3', 3*),
(i) wobei die Signale der Vielzahl von Sensorelementen mittels des mindestens einen Multiplexers über zu mindest eine Datenleitung (4') seriell ausgelesen werden;
(ii) zwischen jedem einzelnen thermischen Sensorelement (1', 1*) und dem Multiplexer (2) jeweils ein eigener Verstärker (3', 3*) geschaltet ist;
**dadurch gekennzeichnet, dass**
(iii) die Verstärker zur Verringerung der Wärmelast zyklisch ein- und ausgeschaltet werden.

## Claims

1. **Array** for reading out electronic signals (t₁,t₄) from high-resolution thermal sensors, having a plurality of thermal sensor elements (1',1*), at least one multiplexer (2) and amplifiers (3',3*), wherein the signals of the plurality of sensor elements can be serially read out by means of the at least one multiplexer via at least one data line (4'), wherein between each individual thermal sensor element (1',1*) and the multiplexer (2), a respective own amplifier (3',3*) is connected, **characterized in that** the amplifiers (3',3*) are adapted to be cyclically switched on and off, to reduce a thermal load.

2. Array according to claim 1, wherein the amplifiers can be switched on and switched off via means in the circuit.

3. Array according to claim 1 or 2, wherein the amplifiers are operational amplifiers.

4. Array according to claim 1 or 2, wherein the amplifiers are differential amplifiers.

5. Array according to claim 1 or 2, wherein the amplifiers are impedance converters.

6. Array according to claim 1 or 2, wherein the circuit array is produced in an integrated fashion in CMOS technology.

7. Array according to claim 1, wherein in its capacity as an array, it has more than "a few dozen" of sensor elements.

8. Array according to claim 7, wherein a few million sensors (1',1*) and a few multiplexers (2) are provided.

9. **Process for reading out** electronic signals (t₁,t₄) from high-resolution thermal sensors, having a plurality of thermal sensor elements (1',1*), at least one multiplexer (2) and amplifiers (3',3*),
(i) wherein the signals of the plurality of sensor elements are serially read out by means of the at least one multiplexer via at least one data line (4');
(ii) between each individual thermal sensor element (1',1*) and the multiplexer (2), a respective own amplifier (3',3*) is connected;
**characterized in that**
(iii) the amplifiers are cyclically switched on and off to reduce the thermal load.

## Revendications

1. Dispositif de lecture de signaux électroniques (t1, t4) de capteurs thermiques à haute résolution, comprenant une pluralité d'éléments capteurs thermiques (1', 1*), au moins un multiplexeur (2) et des amplificateurs (3', 3*), dans lequel les signaux de la pluralité d'éléments capteurs peuvent être lus en série par au moins un multiplexeur via au moins une ligne de données (4'), dans lequel un amplificateur propre (3', 3*) est monté respectivement entre chaque élément capteur thermique individuel (1', 1*) et le multiplexeur (2), **caractérisé en ce que** les amplificateurs (3', 3*) peuvent être connectés et déconnectés de manière cyclique pour réduire une charge thermique.

2. Dispositif selon la revendication 1, dans lequel les amplificateurs peuvent être connectés et déconnectés par des mesures préventives dans le circuit.

3. Dispositif selon la revendication 1 ou 2, dans lequel les amplificateurs sont des amplificateurs opérationnels.

4. Dispositif selon la revendication 1 ou 2, dans lequel les amplificateurs sont des amplificateurs différentiels.

5. Dispositif selon la revendication 1 ou 2, dans lequel les amplificateurs sont des transformateurs d'adaptation d'impédance.

6. Dispositif selon la revendication 1 ou 2, dans lequel le circuit est fabriqué sous forme intégrée en technologie CMOS.

7. Dispositif selon la revendication 1, possédant comme système plus de "quelques douzaines" d'éléments capteurs.

8. Dispositif selon la revendication 7 qui est pourvu de quelques millions de capteurs (1', 1*) et de quelques multiplexeurs (2).

9. Procédé de lecture de signaux électroniques (t1, t4) de capteurs thermiques à haute résolution, comprenant une pluralité d'éléments capteurs thermiques (1', 1*), au moins un multiplexeur (2) et des amplificateurs (3', 3*), dans lequel
(i) les signaux de la pluralité d'éléments capteurs sont lus en série par au moins un multiplexeur via au moins une ligne de données (4'),
(ii) un amplificateur propre (3', 3*) est respectivement monté entre chaque élément capteur thermique individuel (1', 1*) et le multiplexeur (2);
**caractérisé en ce que**
(iii) les amplificateurs sont connectés et déconnectés de manière cyclique pour réduire la charge thermique.
